# FASCICULE DE BREVET EUROPEEN

(11) **EP 0 635 706 B1**
(45) Date de publication et mention de la délivrance du brevet: **08.10.1997**
(21) Numéro de dépôt: 94110778.1
(22) Date de dépôt: 12.07.1994
(51) Int. Cl.: G01K 11/16, G01K 1/02

(54) **Indicateur de températures et montre munie d'un tel indicateur de températures**
Temperaturanzeiger und Uhr mit einem solchen Temperaturanzeiger
Temperature indicator and watch with such a temperature indicator

(30) Priorité: 23.07.1993 CH 2245/93; 30.07.1993 FR 9309531
(43) Date de publication de la demande: 25.01.1995
(73) Titulaire: ASULAB S.A., CH-2501 Bienne (CH)
(72) Inventeur: Grupp, Joachim, CH-2003 Neuchâtel (CH); Poli, Jean-Charles, CH-2206 Les Geneveys-sur Coffrane (CH)
(74) Mandataire: Patry, Didier Marcel Pierre

(56) Documents cités:
- GB-A- 2 135 081
- GB-A- 2 199 981
- US-A- 4 952 033
- PATENT ABSTRACTS OF JAPAN vol. 11, no. 19 (P-537) 20 Janvier 1987 & JP-A-61 193 039 (SURIITEC KK) 27 Août 1986

## Description

L'invention concerne un indicateur de températures constitué d'un substrat comprenant une pluralité de zones distinctes juxtaposées, qui sont chacune recouvertes d'un matériau thermosensible réagissant dans une gamme de températures déterminée, ainsi qu'une montre munie d'un tel indicateur de températures.

On connait déjà des indicateurs de températures utilisant des encres thermosensibles composées de cristaux liquides thermochromiques. Leur technologie est largement décrite dans la revue Handbook of Thermochromic Liquid Crystal Technology, Hallcrest 1991. Ces indicateurs de températures sont constitués d'un substrat comprenant plusieurs zones distinctes juxtaposées qui sont chacune recouvertes d'un matériau thermosensible réagissant pour chaque zone à une température déterminée. Ces indicateurs de températures comprennent autant de zones, et par conséquent autant de capteurs, que de pas de température mesurable. Ils doivent donc comprendre un grand nombre de capteurs pour pouvoir indiquer une gamme de températures significative, comme par exemple 30 capteurs pour une mesure de la température de 0°C à 30°C avec une résolution de 1°C par pas. Lorsque ce type d'indicateur de températures doit être présenté sur un élément de petite surface, tel qu'un cadran de montre ou d'horloge comme décrit dans la demande de brevet britannique GB-A-2.135.081 par exemple, la lisibilité devient faible en raison de l'importance du nombre de capteurs par rapport à la taille du cadran d'une montre qui impose que chaque capteur ait une très petite surface individuelle.

L'invention vise à remédier à cet inconvénient en proposant un indicateur de températures permettant une mesure relativement précise de la température sur une large gamme de températures avec un nombre réduit de zones ayant une grande surface individuelle.

A cet effet, l'invention a pour objet un indicateur de températures constitué d'un substrat comprenant une pluralité de zones distinctes juxtaposées qui sont chacune recouvertes d'un premier matériau thermosensible réagissant dans une première gamme de températures déterminée, ladite première gamme de températures étant différente pour chacune desdites zones, caractérisé en ce que chacune desdites zones est en outre recouverte d'au moins un deuxième matériau thermosensible réagissant dans une deuxième gamme de températures déterminée, ladite deuxième gamme de températures étant différente pour chacune desdites zones, l'intersection de ladite première gamme de températures avec ladite deuxième gamme étant nulle dans chaque zone.

Les avantages obtenus grâce à cette invention consistent en ce qu'il est possible de mesurer la température de manière précise dans une gamme de températures importante, avec un nombre de zones réduit, diminuant ainsi le prix de l'indicateur de température, et en ce que chaque capteur a une grande surface individuelle permettant une bonne lisibilité. De plus l'indicateur de températures se présente sous une apparence très colorée rendant ainsi son aspect très attractif ce qui est particulièrement intéressant lorsqu'il est utilisé en liaison avec une montre bracelet.

D'autres avantages et caractéristiques de l'invention apparaîtront plus clairement à la lecture de la description qui suit de modes de réalisation de l'invention, cette description étant faite en liaison avec le dessin dans lequel :
- la figure 1 représente une forme d'exécution d'un indicateur de températures selon l'invention en forme d'anneau constitué de huit zones comprenant chacune trois matériaux thermosensibles;
- la figure 2 représente l'aspect de l'indicateur de températures de la figure 1 à chaque température mesurable entre -34°C et 90°C;
- la figure 3 représente la structure en coupe d'une première variante de cette forme d'exécution de l'invention;
- la figure 4 représente la structure en coupe d'une seconde variante de cette forme d'exécution de l'invention, et

la figure 5 représente une utilisation préférée de l'indicateur de températures selon l'invention.

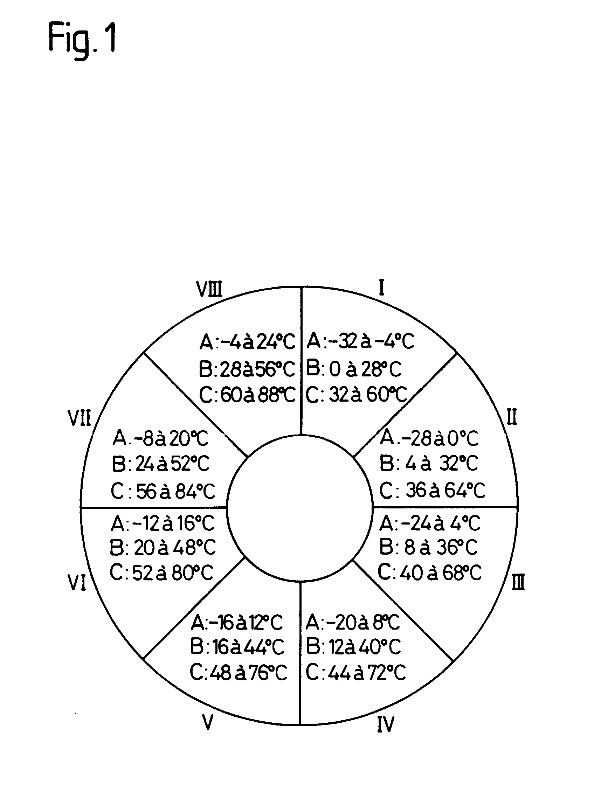

Sur la figure 1, on peut voir un indicateur de températures constitué d'un substrat 1 en forme d'anneau comprenant huit zones distinctes juxtaposées, nommées capteurs I à VIII. Ces huit capteurs sont recouverts chacun d'un premier matériau thermosensible A, d'un deuxième matériau thermosensible B et d'un troisième matériau thermosensible C. Ces matériaux thermosensibles sont constitués d'encres thermochromiques qui réagissent chacune dans une gamme de températures déterminée.

Chacune des encres thermochromiques A, B et C a la même plage d'activité de 28°C mais dans un domaine de fonctionnement décalé. Le premier matériau thermosensible A réagit entre -32 et -4°C dans le capteur I, entre -28 et 0°C dans le capteur II et ainsi de suite jusqu'au capteur VIII où il réagit entre -4 et 24°C. Le deuxième matériau thermosensible B réagit entre 0 et 28°C dans le capteur I, entre 4 et 32°C dans le capteur II et ainsi de suite jusqu'au capteur VIII où il réagit entre 60 et 88°C. Ainsi, dans chaque capteur, on peut voir que l'intersection des trois gammes de températures pour lesquelles les trois encres thermochromiques A, B, C réagissent est nulle. Les encres A, B, C sont donc bien entendu différentes pour chacun des capteurs I à VIII mais sont pour des raisons de commodité désignées par A, B, C pour tous les capteurs.

De plus on peut voir que l'encre A du capteur I et l'encre A du capteur II possèdent une plage de températures de réaction commune entre -28 et -4°C, cette plage de températures commune ayant une largeur de 24°C. On peut également voir que l'encre B du capteur I et l'encre B du capteur II possèdent également une plage de températures de réaction commune entre 4 et 28°C, cette plage de températures ayant aussi une largeur de 24°C. Ainsi chacune des encres A, B, ou C du capteur I présente une partie de sa gamme de températures de réaction commune avec chacune des encres A, B ou C respectivement du capteur II, cette plage de températures commune de 24°C étant inférieure de la valeur d'un pas à la gamme de températures de réaction qui est de 28°C pour chaque encre. Chacune de ces trois encres A, B, ou C a donc la même gamme de températures de réaction, mais avec un domaine de fonctionnement décalé d'un pas de 4°C par capteur adjacent.

Le tableau ci-après représente une table de vérité de l'état allumé de chacune des encres A, B et C de chacun des capteurs I à VIII entre -34 et 90°C.

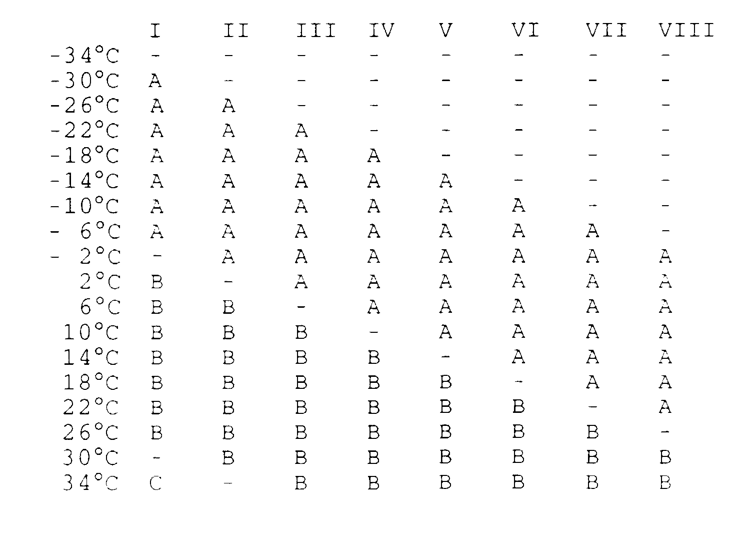

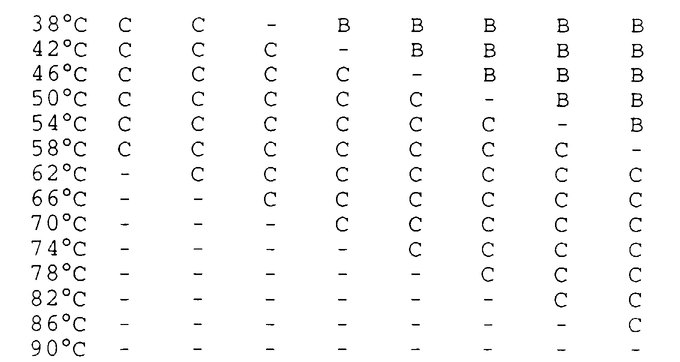

Les huit capteurs de cet indicateur de températures changent de couleur en fonction de la température dans leur plage d'activité. La gamme de températures d'un tour d'anneau est égale au nombre de zones multiplié par le pas, donc de 32°C. Chaque capteur a une plage d'activité inférieure de 1/ (nombre de zones) à la gamme d'un tour de l'anneau c'est à dire de 4°C, ce qui permet à chacun des capteurs de n'avoir aucune activité, donc d'être de la couleur d'un substrat, en l'occurrence noir, une fois par tour d'anneau. Lorsque la température augmente de la valeur du pas, c'est-à-dire 4°C, ce secteur non actif se colore, le capteur contigu quant à lui devient non actif parce qu'il atteint la fin de sa plage d'activité, ce qui permet d'obtenir une rotation des couleurs sur l'anneau.

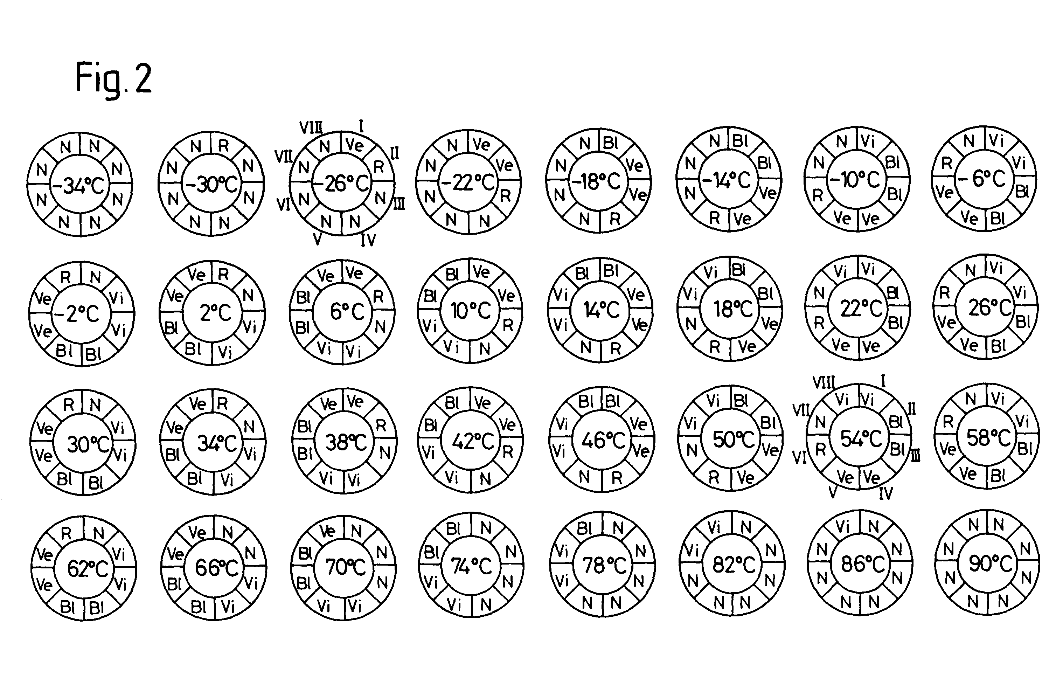

La figure 2 montre ainsi l'apparence de chaque capteur de l'indicateur de températures tel que décrit dans la figure 1, entre -34 et 90°C. A -34°C, aucune des trois encres de chacun des capteurs ne réagit et par conséquent, les huit capteurs sont noirs, cette couleur étant la couleur du substrat. La couleur d'une encre dans sa gamme de températures de réaction varie du rouge R vers le vert Ve, le bleu B puis le violet Vi à mesure que la température augmente. En dehors de sa gamme de températures de réaction, l'encre est transparente et apparait noire, cette couleur étant la couleur du substrat. Ainsi, à -30°C, l'encre A du premier capteur I réagit et est rouge R. A -26°C, l'encre A du capteur I réagit pour devenir verte Ve et l'encre A du capteur II réagit pour devenir rouge tandis que les trois encres des autres capteurs III à VIII ne réagissent pas, ces capteurs restant noirs. A-6°C, l'encre A est violette Vi dans le capteur I, violette Vi dans le capteur II, bleue Bl dans les capteurs III et IV, verte Ve dans les capteurs V et VI, rouge R dans le capteur VII et noire N dans le capteur VIII. Ainsi, comme on a trois encres thermochromiques par capteur, on dispose de 24 éléments capteurs, ce qui permet d'obtenir 18 fois un seul capteur non actif, soit 18 températures à la résolution du pas entre -6 et 62°C. La température est lue à côté de ce secteur non actif grâce à une échelle de températures non représentée.

Hors de cette gamme de températures, c'est-à-dire en dessous de -6°C et au-dessus de 62°C, les capteurs non actifs s'additionnent, ce qui permet d'estimer la température par le nombre de capteurs non actifs et d'augmenter la gamme de mesures de la température.

Comme on peut le voir sur la figure 2, l'apparence de l'anneau est identique à certaines températures comme par exemple à -6°C, 26°C et 58°C. Il est toutefois aisé pour l'utilisateur de l'indicateur de températures de faire la différence entre ces températures.

Selon deux variantes de cette forme d'exécution, les trois encres thermochromiques A, B et C peuvent être soit mélangées, soit superposées.

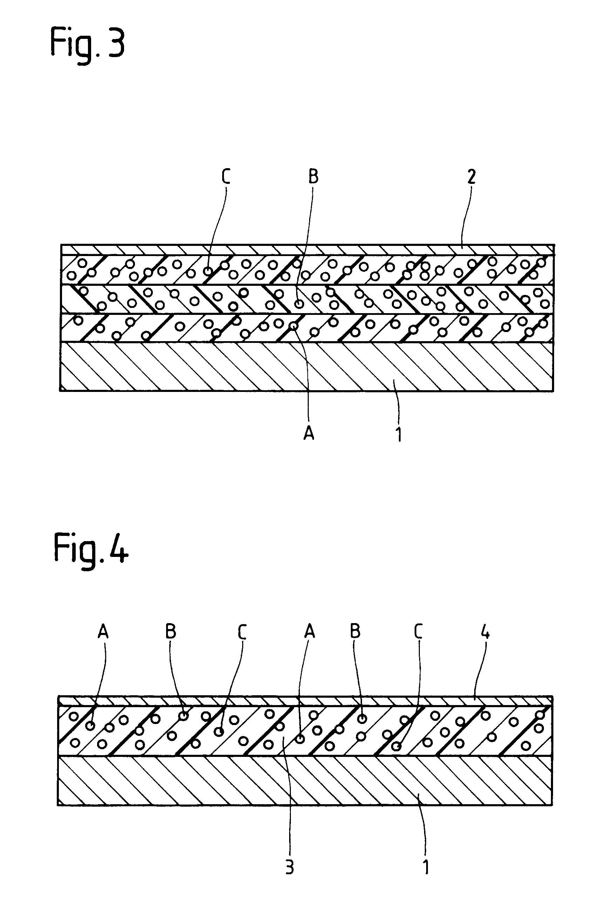

Sur les figures 3 et 4, on peut voir un substrat 1, présentant de préférence une surface de couleur noire de façon à absorber une des polarisations de la lumière. Ce substrat 1 est réalisé en un matériau présentant de préférence une conduction thermique élevée.

Sur la figure 3, les encres A, B et C sont déposées en trois couches superposées, la couche supérieure étant recouverte d'un film protecteur 2 transparent qui offre d'une part une protection mécanique contre les rayures, et d'autre part, une protection contre les radiations UV augmentant par là-même la durée de vie de l'indicateur.

Sur la figure 4, les encres A, B et C sont respectivement encapsulées et mélangées chacune en quantité égale et de manière homogène dans une couche formée d'un liant transparent 3 également recouvert d'un film protecteur 4 équivalent à celui représenté à la figure 3.

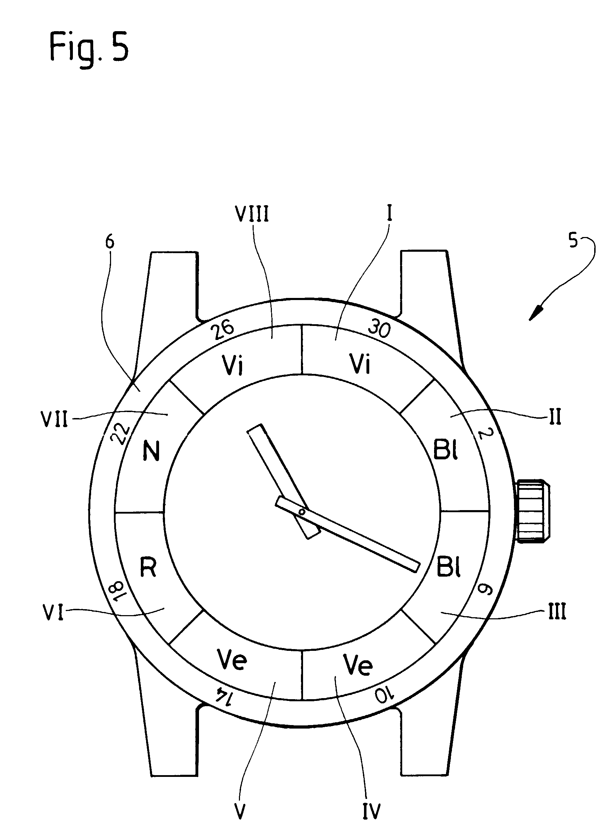

Sur la figure 5, on peut voir que l'indicateur de températures selon l'invention tel que décrit précédemment peut être disposé sur une lunette métallique d'une montre-bracelet. Cette lunette, comprend huit capteurs I à VIII. Le capteur I est violet Vi, les capteurs II et III sont bleus Bl, les capteurs IV et V sont verts Ve, le capteur VI est rouge R, le capteur VII est noir N et le capteur VIII est violet Vi. La température de 22°C est lue sur l'échelle de températures 6 à côté du capteur VII qui est noir.

Lorsque la température augmentera de la valeur du pas, c'est-à-dire 4°C, ce capteur VII se colorera et le capteur VIII deviendra quant à lui non actif, donc noir, puisqu'il aura atteint la fin de sa plage d'activité. La température de 26°C sera lue à côté du capteur VIII.

Lors du porté de la montre, la température de celle-ci est influencée par la température du corps du porteur et celle du milieu ambiant. Si le porteur est dans un milieu plus froid que la température du corps, le corps transmet de la chaleur à la montre par conductivité thermique,et si le milieu est plus chaud, c'est le contraire qui se produit. Cette influence a pour effet de perturber la mesure de la température. La température en mode porté doit être corrigée de préférence par une approximation linéaire.

Il est possible de prévoir différents types de montres dont l'échelle de températures mesurables est adaptée à la température de son utilisation, par exemple des montres dont l'indicateur de températures est adapté pour les sports d'hiver, pour les sports nautiques, dans les pays chauds ou dans les pays froids.

On remarquera que la lecture de l'indicateur de températures selon l'invention est, contrairement aux indicateurs de températures thermochromiques de l'art antérieur, totalement indépendante de l'angle sous lequel l'indicateur est lu. En effet, la température est indiquée par le capteur dont les encres ne sont pas actives et par conséquent par la couleur du substrat.

Dans l'exemple de réalisation qui vient d'être décrit, le pas de l'indicateur est de 4°C. Bien entendu, ce pas peut être différent et être choisi en fonction de l'application désirée. Pour un nombre de capteurs N donné, le pas P désiré détermine la plage de fonctionnement des encres ΔT par la formule suivante: ΔT=(N-1)P.

A titre d'exemple, si l'on désire réaliser un indicateur de températures selon l'invention présentant un pas de 1°C et comportant huit capteurs, la plage de fonctionnement de chaque encre utilisée dans les capteurs sera de 7°C.

On comprendra également de la description qui précède que selon une variante, un indicateur de températures selon l'invention peut fonctionner avec deux encres par capteurs sur le même principe.

## Revendications

1. Indicateur de températures constitué d'un substrat (1) comprenant une pluralité de zones distinctes (I à VIII) juxtaposées qui sont recouvertes chacune d'un premier matériau thermosensible (A) réagissant dans une première gamme de températures déterminée, ladite première gamme de températures étant différente pour chacune desdites zones (I à VIII), caractérisé en ce que chacune desdites zones (I à VIII) est en outre recouverte d'au moins un deuxième matériau thermosensible (B) réagissant dans une deuxième gamme de températures déterminée, ladite deuxième gamme de températures étant différente pour chacune desdites zones, l'intersection de ladite première gamme de températures avec ladite deuxième gamme de températures étant nulle dans chaque zone.

2. Indicateur de températures selon la revendication 1, caractérisé en ce que chaque zone (I à VIII) comprend en outre un troisième matériau thermosensible (C) réagissant dans une troisième gamme de températures déterminée, l'intersection de ladite troisième gamme de températures avec lesdites première et deuxième gammes de températures étant nulle dans chaque zone.

3. Indicateur de températures selon l'une des revendications 1 ou 2, caractérisé en ce qu'un desdits matériaux thermosensibles (A, B ou C) d'une première zone (I à VIII) présente une partie de sa gamme de températures qui est commune avec une partie de la gamme de températures d'un desdits matériaux (A, B ou C) d'une deuxième zone adjacente et en ce que l'intersection de la gamme de températures de la première zone avec la gamme de températures dudit matériau de ladite deuxième zone est inférieure à chacune desdites gammes de températures.

4. Indicateur de températures selon l'une des revendications 1 à 3, caractérisé en ce que ladite plage de températures commune est constante.

5. Indicateur de températures selon l'une des revendications 1 à 4, caractérisé en ce que la largeur desdites gammes de températures est identique pour chaque matériau thermosensible.

6. Indicateur de températures selon l'une des revendications 1 à 5, caractérisé en ce que lesdites zones (I à VIII) sont disposées en anneau.

7. Indicateur de températures selon l'une des revendications 1 à 6, caractérisé en ce que lesdits matériaux thermosensibles (A, B, C) sont déposés sur le substrat (1) en couches successives superposées.

8. Indicateur de températures selon l'une des revendications 1 à 6, caractérisé en ce que lesdits matériaux thermosensibles (A, B, C) sont respectivement encapsulés et mélangés dans une couche formée d'un liant transparent (3).

9. Indicateur de températures selon l'une des revendications 1 à 8, caractérisé en ce que ledit substrat (1) est réalisé en un matériau présentant une conduction thermique élevée.

10. Indicateur de températures selon l'une des revendications 1 à 9, caractérisé en ce que ledit substrat (1) comprend une surface de fond noire sur laquelle lesdits matériaux thermosensibles (A, B, C) sont déposés.

11. Montre (4) munie d'un indicateur de températures selon l'une des revendications 1 à 10.

## Patentansprüche

1. Temperaturanzeiger, gebildet von einem Substrat (1), mit einer Mehrzahl von getrennten benachbarten Zonen (I bis VIII), die jeweils von einem ersten thermosensiblen Material (A) abgedeckt sind, das in einem ersten bestimmten Temperaturbereich reagiert, welcher erste Temperaturbereich für jede der Zonen (I bis VIII) unterschiedlich ist, dadurch gekennzeichnet, daß jede der Zonen (I bis VIII) ferner mit mindestens einem zweiten thermosensiblen Material (B) bedeckt ist, das in einem zweiten bestimmten Temperaturbereich reagiert, welcher zweite Temperaturbereich für jede der Zonen unterschiedlich ist, wobei in jeder Zone der Schnittpunkt des ersten Temperaturbereichs mit dem zweiten Temperaturbereich Null ist.

2. Temperaturanzeiger nach Anspruch 1, dadurch gekennzeichnet, daß jede Zone (I bis VIII) ferner ein drittes thermosensibles Material (C) umfaßt, das in eine dritten bestimmten Temperaturbereich reagiert, wobei in jeder Zone der Schnittpunkt des dritten Temperaturbereichs mit dem ersten und dem zweiten Temperaturbereich Null ist.

3. Temperaturanzeiger nach einem der Ansprüche 1 oder 2, dadurch gekennzeichnet, daß jedes der thermosensiblen Materialien (A, B oder C) einer ersten Zone (I bis VIII) eine Partie ihres Temperaturbereichs aufweist, der mit einer Partie des Temperaturbereichs eines der Materialien (A, B oder C) einer zweiten benachbarten Zone gemeinsam ist, und daß der Schnittpunkt der Temperaturbereiche der ersten Zone mit dem Temperaturbereich des Materials der zweiten Zone kleiner ist als jeder der Temperaturbereiche.

4. Temperaturanzeiger nach einem der Ansprüche 1 bis 3, dadurch gekennzeichnet, daß das Feld der gemeinsamen Temperaturen konstant ist.

5. Temperaturanzeiger nach einem der Ansprüche 1 bis 4, dadurch gekennzeichnet, daß die Breite der Temperaturbereiche für jedes thermosensible Material identisch ist.

6. Temperaturanzeiger nach einem der Ansprüche 1 bis 5, dadurch gekennzeichnet, daß die Zonen (I bis VIII) ringförmig angeordnet sind.

7. Temperaturanzeiger nach einem der Ansprüche 1 bis 6, dadurch gekennzeichnet, daß die thermosensiblen Materialien (A, B, C) auf dem Substrat (1) in aufeinanderfolgend überlagerten Schichten aufgebracht sind.

8. Temperaturanzeiger nach einem der Ansprüche 1 bis 6, dadurch gekennzeichnet, daß die thermosensiblen Materialien (A, B, C) jeweils eingekapselt sind und in eine Schicht eingemischt sind, die ein transparentes Bindemittel (3) bildet.

9. Temperaturanzeiger nach einem der Ansprüche 1 bis 8, dadurch gekennzeichnet, daß das Substrat (1) aus einem Material hergestellt ist, das eine erhöhte thermische Leitfähigkeit aufweist.

10. Temperaturanzeiger nach einem der Ansprüche 1 bis 9, dadurch gekennzeichnet, daß das Substrat (1) eine Oberfläche mit schwarzem Hintergrund umfaßt, auf dem die thermosensiblen Materialien (A, B, C) aufgetragen sind.

11. Tragbare Uhr (4), versehen mit einem Temperaturanzeiger nach einem der Ansprüche 1 bis 10.

## Claims

1. Temperature indicator constituted by a substrate (1) comprising a plurality of distinct juxtaposed zones (I to VIII) each being covered over by a first thermosensitive material (A) reacting within a first predetermined temperature range, said first temperature range being different for each of said zones (I to VIII), characterized in that each of said zones is further covered over by at least one second thermosensitive material (B) reacting within a second predetermined temperature range, said second temperature range being different for each of said zones, the overlapping of said first temperature range with said second temperature range being inexistent within each zone.

2. Temperature indicator according to claim 1, characterized in that each zone (I to VIII) further comprises a third thermosensitive material (C) reacting within a third predetermined temperature range, the overlapping of said third temperature range with said first and second temperature ranges being inexistent within each zone.

3. Temperature indicator according to either claims 1 or 2, characterized in that one of said thermosensitive materials (A, B or C) from a first zone (I to VIII) exhibits a portion of its temperature range on one of said materials (A, B or C) from a second adjacent zone and in that the overlapping of the temperature range of the first zone with the temperature range of said material of said second zone is inferior to each of said temperature ranges.

4. Temperature indicator according to any of claims 1 to 3, characterized in that the span of common temperatures is constant.

5. Temperature indicator according to any of claims 1 to 4, characterized in that the breadth of said temperature ranges is identical for each thermosensitive material.

6. Temperature indicator according to any of claims 1 to 5, characterized in that said zones (I to VIII) are arranged in a ring.

7. Temperature indicator according to any of claims 1 to 6, characterized in that said thermosensitive materials (A, B, C) are deposited onto the substrate (1) in successive superposed layers.

8. Temperature indicator according to any of claims 1 to 6, characterized in that said thermosensitive materials (A, B, C) are respectively encapsulated and mixed in a layer formed from a transparent binder (3).

9. Temperature indicator according to any of claims 1 to 8, characterized in that said substrate (1) is formed of a material exhibiting a high thermal conductivity.

10. Temperature indicator according to any of claims 1 to 9, characterized in that said substrate (1) comprises a black bottom surface on which said thermosensitive materials (A, B, C) are deposited.

11. Watch (4) provided with a temperature indicator in accordance with any of claims 1 to 10.
